## Europäisches Patentamt
## European Patent Office
## Office européen des brevets

(19)

(11) Numéro de publication: **0 078 073**
**B1**

(12)

# FASCICULE DE BREVET EUROPEEN

(45) Date de publication du fascicule du brevet:
**29.08.84**

(51) Int. Cl.³: **C 01 B 17/76**

(21) Numéro de dépôt: **82201244.9**

(22) Date de dépôt: **07.10.82**

(54) Procédé pour fabriquer de l'acide sulfurique.

(30) Priorité: **26.10.81 LU 83715**

(43) Date de publication de la demande:
**04.05.83 Bulletin 83/18**

(45) Mention de la délivrance du brevet:
**29.08.84 Bulletin 84/35**

(84) Etats contractants désignés:
**BE DE FR GB IT NL SE**

(56) Documents cités:
**BE - A - 665 785**
**BE - A - 670 098**
**DE - A - 2 505 828**
**DE - A - 2 703 474**
**DE - A - 2 905 083**
**FR - A - 2 152 807**
**FR - A - 2 229 642**
**FR - A - 2 250 561**

(73) Titulaire: **METALLURGIE HOBOKEN-OVERPELT Société anonyme dite:, 8, rue Montagne du Parc, B-1000 Bruxelles (BE)**

(72) Inventeur: **Felix, Noel Frans, Baron Descampslaan 72, B-3018 Wijgmaal-Leuven (BE)**
Inventeur: **Vermeylen, Guido Cornelius, Andreas Vesaliuslaan 11, B-2520 Edegem (BE)**

(74) Mandataire: **Saelemaekers, Juul et al, METALLURGIE HOBOKEN-OVERPELT A. Greinerstraat 14, B-2710 Hoboken (BE)**

BUNDESDRUCKEREI BERLIN

## Description

La présente invention se rapporte à un procédé pour fabriquer de l'acide sulfurique à partir d'un gaz de grillage contenant du $SO_2$, de la vapeur d'eau et du mercure, comprenant les étapes suivantes:

(a) on met le gaz en contact avec de l'acide sulfurique de façon à produire un gaz sec, en diluant ainsi l'acide et en abaissant ainsi en même temps la teneur en mercure du gaz, une partie du mercure présent dans le gaz de départ passant dans l'acide sulfurique;

(b) on soumet le gaz sec à un traitement d'oxydation catalytique de façon à produire un gaz riche en $SO_3$;

(c) on met le gaz riche en $SO_3$ en contact avec de l'acide sulfurique concentré en absorbant ainsi le $SO_3$ dans cet acide concentré et on maintient la concentration de cet acide à sa valeur initiale par l'ajoute d'acide sulfurique dilué; et

(d) après avoir effectué l'étape (a) et avant d'effectuer l'étape (c), on met le gaz en contact avec un agent sulfatant contenant de l'acide sulfurique de façon à abaisser davantage la teneur en mercure du gaz.

Un tel procédé est décrit dans le brevet US-A-3 954 451. Dans ce procédé connu on effectue la mise en contact du gaz avec un agent sulfatant contenant de l'acide sulfurique avant l'étape (b) et on utilise en tant qu'agent sulfatant de l'acide sulfurique d'une concentration de 70 à 99% (en poids), de préférence de 90%, et d'une température d'au moins 40°C, de préférence de 70 à 100°C. Ce procédé connu présente l'inconvénient que le gaz riche en $SO_3$, qui arrive dans l'étape (c), renferme encore une quantité sensible de mercure, que l'on retrouve ultérieurement dans le produit final, c'est-à-dire dans l'acide sulfurique concentré produit dans l'étape (c).

Le but de la présente invention est de fournir un procédé tel que défini ci-dessus, qui évite l'inconvénient ci-dessus du procédé connu.

Selon l'invention, on effectue la mise en contact du gaz avec un agent sulfatant contenant de l'acide sulfurique après l'étape (b) et on utilise de l'oléum en tant qu'agent sulfatant.

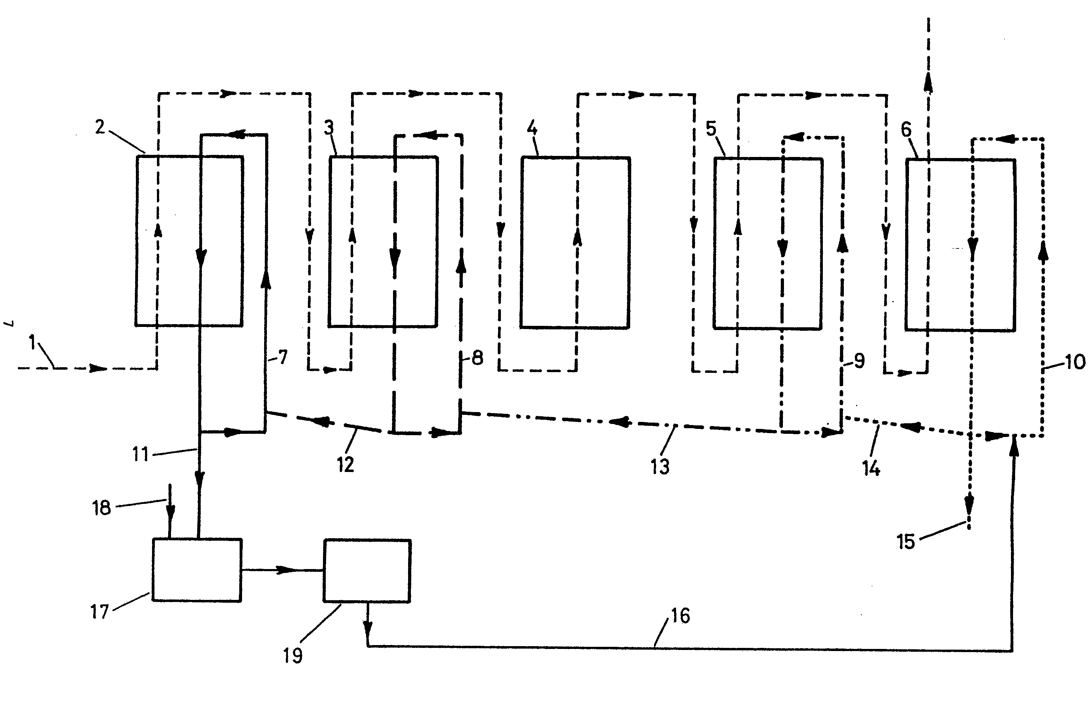

Dans un mode de réalisation du procédé de l'invention, qui est illustré par le dessin schématique ci-joint, on part d'un gaz produit lors du grillage agglomérant sur grille sans fin d'un concentré sulfuré de métaux non-ferreux.

On fait passer le gaz 1, que l'on a déjà dépoussiéré dans une installation conventionnelle de dépoussiérage non représentée, successivement à travers une première tour de séchage 2, une seconde tour de séchage 3, un convertisseur catalytique 4, une tour de lavage à l'oléum 5 et une tour d'absorption 6.

Dans la première tour de séchage 2 on fait de l'acide 7 d'une concentration d'environ 78%, dans la seconde tour de séchage 3 de l'acide 8 d'une concentration d'environ 96%, dans la tour de lavage 5 de l'oléum 9 d'une concentration d'environ 104% et dans la tour d'absorption de l'acide 10 d'une concentration d'environ 96,5—98,5%.

Pour maintenir la concentration de l'acide 7 circulant dans la première tour de séchage à environ 78% on en soutire une fraction 11 et on y ajoute une fraction 12, que l'on soutire de l'acide 8 circulant dans la seconde tour de séchage 3. Pour maintenir la concentration de l'acide 8 circulant dans la seconde tour de séchage à environ 96% on en soutire la fraction 12 susdite et on y ajoute une fraction 13, que l'on soutire de l'oléum 9 circulant dans la tour de lavage 5. La fraction 13 soutirée de l'oléum 9 circulant dans la tour de lavage 5 est remplacée dans cette tour 5 par une fraction 14, que l'on soutire de l'acide 10 circulant dans la tour d'absorption 6. Pour maintenir la concentration de l'acide 10 circulant dans la tour d'absorption 6 à environ 96,5—98,5% on en soutire la fraction 14 susdite ainsi qu'une fraction 15 constituant le produit final du procédé et on y ajoute de l'acide 16 à environ 78% exempt de mercure. Cet acide 16 est produit à partir de la fraction 11 susdite, à laquelle on ajoute en 17 un agent 18 précipitant le mercure tel par exemple du thiosulfate de sodium et dont on sépare en 19 le précipité de mercure.

La température régnant dans la tour de lavage à l'oléum 5 est d'environ 60—100°C, puisque le gaz sortant du convertisseur catalytique 4 est à une température d'environ 180—250°C.

Le gaz 1 entrant dans la première tour de séchage 2 peut contenir, par exemple, 5% en volume de $SO_2$, 25 g/Nm3 de $H_2O$ et 13 mg/Nm3 de Hg, et le produit final, c'est-Wà-dire la fraction 15, contient moins de 0,1 mg/l de Hg.

Il est à noter que la précipitation du mercure dans de l'acide sulfurique par un thiosulfate est décrite en détail dans le brevet US-A-3 932 149 et que d'autres méthodes de précipitation de mercure, qui peuvent également être utilisées en cambinaison avec le procédé de la présente invention, sont décrites dans le brevet US-A-3 954 451 précité.

Il est également à noter qu'il ne faut pas avoir de l'oléum à sa disposition pour mettre en marche le procédé de l'invention, car la Demanderesse à trouvé que le mercure présent dans le gaz provenant du convertisseur 4 est aussi efficacement absorbé par de l'acide sulfurique concentré que par de l'oléum. Lors de la mise en marche de l'installation décrite ci-dessus on peut donc faire circuler dans la tour 5 de l'acide sulfurique concentré, par exemple de l'acide d'une concentration supérieure à 70%, qui au contact avec les gaz provenant du convertisseur 4 va se transformer en oléum. La concentration de cet oléum, une fois que l'installation a atteint son régime normal, dépendra de la teneur en $SO_3$ des gaz provenant du convertisseur 4 et de la température régnant dans la tour 5.

Il est aussi à noter que la température régnant dans la tour de lavage à l'oléum 5 n'est pas critique, car la Demanderesse a trouvé que le mercure présent dans le gaz provenant du convertisseur 4 est aussi efficacement absorbé par de l'oléum à 20°C que par de l'oléum à 80°C.

Il est évident que le procédé de l'invention n'est pas limité au mode de réalisation décrit ci-dessus et que de nombreuses modifications peuvent être apportées à ce mode de réalisation. Si, par exemple, on part d'un gaz 1 ayant un rapport $SO_2:H_2O$ élevé, on ne produit pas assez d'acide 16 pour maintenir la concentration de l'acide 10 au niveau voulu; dans ce cas, on ajoute de l'eau soit dans le circuit de l'acide 10 soit à la fraction 11 avant, pendant ou après son traitement. Par contre, si on part d'un gaz 1 ayant un rapport $SO_2 : H_2O$ faible, on produit trop d'acide 16 pour maintenir la concentration de l'acide 10 au niveau voulu; dans ce cas, on soutire une partie de l'acide 16 et on peut, par exemple, commercialiser cette partie soutirée comme acide dilué. Si, par exemple, on part d'un gaz 1 relativement sec, on peut utiliser une seule tour de séchage au lieu de deux.

Pour maintenir la concentration de l'acide 8 circulant dans la seconde tour de séchage 3 au niveau voulu, il est également possible d'y ajouter, au lieu de la fraction 13 soutirée de l'oléum 9 circulant dans la tour 5, la fraction 14 soutirée de l'acide 10 circulant de la tour d'absorption 6; dans cette variante, on peut faire s'accumuler le mercure dans l'oléum 9 circulant dans la tour de lavage 5 jusqu'à une très forte teneur et, pour que cette teneur ne dépasse pas une valeur inadmissible, il suffira de soutirer de cet oléum 9 une faible fraction, que l'on peut par exemple ajouter à la fraction 11 et que l'on remplace par une fraction soutirée de l'acide 10 circulant dans la tour d'absorption 6.

## Exemple

Cet exemple se rapporte à une série d'essais effectuée dans une installation conventionelle de fabrication d'acide sulfurique à partir de gaz de grillage. Cette installation comprend une première tour de séchage, une seconde tour de séchage, un convertisseur catalytique et une tour d'absorption. Elle traite 8,5 Nm3/sec de gaz de grillage contenant du mercure et provenant du grillage agglomérant sur une grille sans fin d'un concentré sulfuré de plomb.

Durant une période de huit jours on dérive une faible quantité des gaz, qui passent de la seconde tour de séchage au convertisseur, vers une tour de lavage expérimentale contenant du $H_2SO_4$ chaud à 98%, à travers laquelle on fait passer les gaz dérivés, en soumettant ceux-ci ainsi à l'étape (d) du procédé de l'art antérieur décrit dans le brevet US-A-3 954 451 susmentionné.

La tour expérimentale a un diamètre de 20 cm et une hauteur de 100 cm; elle est remplie d'anneaux Raschig et chauffée à 80°C.

L'acide à 98% remplissant la tour est de l'acide de production contenant environ 1,5 mg/l de Hg.

On fait passer les gaz, qui sortent de la tour de lavage expérimentale, à travers une installation de dosage de Hg connue en soi, comportant une colonne de lavage à l'hydroxyde de sodium suivie d'une colonne de lavage au permanganate de potassium. On détermine ainsi la teneur en Hg des gaz sortant de la tour de lavage expérimentale.

On mesure, en outre, régulièrement le débit des gaz envoyés à la tour expérimentale ainsi que la teneur en Hg de l'acide présent dans cette tour.

Les résultats de ces mesures sont consignés dans le tableau 1 ci-après.

Tableau 1

I = jour
II = débit moyen des gaz, en Nm3/heure
III = teneur moyenne en Hg de l'acide, en mg/l
IV = teneur moyenne en Hg des gaz sortant de la tour expérimentale, en mg/Nm3

| I | II | III | IV |
|---|---|---|---|
| 1e | 2,1 | 1,67 | 0,085 |
| 2e | 2,2 | 1,41 | 0,077 |
| 3e | 2,1 | 1,64 | 0,070 |
| 4e | 2,0 | 1,52 | 0,145 |
| 5e | 2,2 | 1,52 | 0,139 |
| 6e | 2,2 | 1,45 | 0,201 |
| 7e | 2,0 | 1,41 | 0,132 |
| 8e | 2,1 | 1,43 | 0,091 |

Les données du tableau 1 montrent que le teneur en Hg de l'acide dans la tour de lavage expérimentale reste à peu près constante durant toute la période d'essai (voir colonne III), ce qui veut dire que cet acide n'enlève pas de mercure des gaz sortant de la seconde tour de séchage. Les gaz sortant de la tour de lavage expérimentale contiennent certains jours plus de 0,130 mg/Nm3 de mercure (voir colonne IV). Si on devait envoyer de tels gaz via un convertisseur catalytique à une tour d'absorption, comme le propose l'art antérieur selon le brevet US-A-3 954 451 susmentionné, l'acide produit dans la tour d'absorption aurait certainement une teneur en mercure supérieure à 1 mg/l.

Durant la même période de huit jours on dérive également une faible quantité des gaz, qui passent du convertisseur à la tour d'absorption, vers une tour de lavage expérimentale contenant de l'oléum, à travers laquelle on fait passer les gaz dérivés,en soumettant ceux-ci ainsi à l'étape (d) du procédé de la présente invention.

La tour expérimentale a les mêmes dimensions que celle décrite ci-dessus et elle est également remplie d'anneaux Raschig. Elle est chauffée à 80°C, qui est à peu près la température qui règnerait dans une tour de lavage industrielle installée juste en aval du convertisseur, étant donné que les gaz sortant du convertisseur ont une température d'environ 200°C.

L'oléum remplissant la tour a été préparé en faisant passer des gaz sortant du convertisseur, c'est-à-dire des gaz riches en $SO_3$, à travers de l'acide sulfurique chimiquement pur, celui-ci étant de l'acide à 93% que l'on peut se procurer dans le commerce et qui contient 0,03 mg/l de Hg.

On fait passer les gaz, qui sortent de la tour expérimentale de lavage à l'oléum, à travers une tour expérimentale d'absorption, en soumettant ainsi ces gaz à l'étape (c) du procédé de la présente invention. La tour expérimentale d'absorption est remplie au début de l'essai avec de l'acide sulfurique chimiquement pur à 93%. Une fois que les gaz riches en $SO_3$, qui sortent de la tour expérimentale de lavage à l'oléum, commencent à passer à travers cet acide d'absorption à 93%, la concentration de celui-ci monte. On laisse monter cette concentration jusqu'à 98% et à partir de ce moment on maintient cette dernière concentration en soutirant de l'acide et en ajoutant de l'eau.

La tour expérimentale d'absorption a les mêmes dimensions que les tours expérimentales décrites ci-dessus et elle est également remplie d'anneaux Raschig. Elle est également chauffée à 80°C, qui est la température qui est maintenue dans une tour d'absorption industrielle.

On fait passer les gaz, qui sortent de la tour d'absorption expérimentale, à travers une installation de dosage de Hg connue en soi, qui est identique à celle mentionnée ci-dessus. On détermine ainsi la teneur en Hg des gaz sortant de la tour expérimentale d'absorption.

On mesure, en outre, régulièrement le débit des gaz envoyés à la tour expérimentale de lavage à l'oléum, la teneur en $H_2SO_4$ de l'oléum, la teneur en Hg de l'oléum et la teneur en Hg de l'acide dans la tour expérimentale d'absorption.

Les résultats de ces mesures sont consignés dans le tableau 2 ci-après.

Tableau 2

| I | = | jour |
| II | = | débit moyen des gaz, en Nm³/heure |
| III | = | teneur moyenne en $H_2SO_4$ de l'oléum, en % |
| IV | = | teneur moyenne en Hg de l'oléum, en mg/l |
| V | = | teneur moyenne en Hg de l'acide d'absorption, en mg/l |
| VI | = | teneur moyenne en Hg des gaz sortant de la tour d'absorption, en mg/Nm³ |

| I | II | III | IV | V | VI |
|---|---|---|---|---|---|
| 1e | 1,8 | 104,2 | 1,28 | 0,04 | <0,01 |
| 2e | 2,0 | 105,9 | 1,43 | 0,06 | <0,01 |
| 3e | 1,9 | 105,6 | 1,76 | 0,04 | <0,01 |
| 4e | 2,0 | 105,6 | 2,62 | 0,04 | <0,01 |
| 5e | 2,1 | 105,3 | 3,04 | 0,05 | <0,01 |
| 6e | 2,0 | 106,0 | 3,32 | 0,05 | <0,01 |
| 7e | 2,0 | 105,8 | 3,58 | 0,06 | <0,01 |
| 8e | 2,0 | 105,0 | 4,11 | 0,04 | <0,01 |

Les données du tableau 2 montrent que la teneur en Hg de l'oléum dans la tour de lavage expérimentale s'accroît constamment durant toute la période d'essai (voir colonne IV), ce qui veut dire que cet oléum a enlevé du mercure des gaz sortant du convertisseur. Cet oléum a enlevé tant de mercure de ces gaz que la tour d'absorption en aval de la tour de lavage produit de l'acide sulfurique contenant sensiblement moins que 0,1 mg/l de Hg (voir colonne V), soit de l'acide avec une teneur en Hg largement inférieure à teneur de 1 mg/l susmentionnée.

Dans un procédé tel que défini au premier paragraphe du présent mémoire descriptif, il importe donc d'effectuer la mise en contact du gaz avec un agent sulfatant contenant de l'acide sulfurique après l'étape (b). Il importe également d'utiliser de l'oléum en tant qu'agent sulfatant contenant de l'acide sulfurique; autrement, on ferait fonctionner la tour de captation du mercure comme une tour d'absorption de $SO_3$ et la totalité de l'acide sulfurique produit aurait une teneur inadmissible en mercure.

**Revendications**

1. Procédé pour fabriquer de l'acide sulfurique à partir d'un gaz de grillage contenant du $SO_2$, de la vapeur d'eau et du mercure, comprenant les étapes suivantes

(a) on met le gaz en contact avec de l'acide sulfurique de façon à produire un gaz sec, en diluant ainsi l'acide et en abaissant ainsi en même temps la teneur en mercure du gaz, une partie du mercure présent dans le gaz de départ passant dans l'acide sulfurique;

(b) on soumet le gaz sec à un traitement d'oxydation catalytique de façon à produire un gaz riche en SO₃;

(c) on met le gaz riche en SO₃ en contact avec de l'acide sulfurique concentré en absorbant ainsi le SO₃ dans cet acide concentré et on maintient la concentration de cet acide à sa valeur initiale par l'ajoute d'acide sulfurique dilué; et

(d) après avoir effectué l'étape (a) et avant d'effectuer l'étape (c), on met le gaz en contact avec un agent sulfatant contenant de l'acide sulfurique de façon à abaisser davantage la teneur en mercure du gaz;

ce procédé étant caractérisé en ce qu'on met le gaz en contact avec un agent sulfatant contenant de l'acide sulfurique après l'étape (b) et qu'on utilise de l'oléum en tant qu'agent sulfatant.

2. Procédé selon la revendication 1, caractérisé en ce qu'on effectue l'étape (a) en deux étages.

3. Procédé selon la revendication 1 ou 2, caractérisé en ce que

— on soutire de l'acide dilué dans l'étape (a), on précipite le mercure dans cette acide soutiré, on sépare le précipité de mercure de l'acide en produisant ainsi de l'acide dilué exempt de mercure et on utilise cet acide dilué à l'étape (c);

— on soutire de l'oléum dans l'étape (d) que l'on substitue dans l'étape (a) l'acide dilué soutiré; et

— on soutire de l'acide concentré de l'acide concentré dans l'étape (c) que l'on substitue dans l'étape (d) à l'oléum soutiré.

4. Procédé selon la revendication 1 ou 2, caractérisé en ce que

— on soutire de l'acide dilué dans l'étape (a), on précipite le mercure dans cette acide soutiré, on sépare le précipité de mercure de l'acide en produisant ainsi de l'acide dilué exempt de mercure et on utilise cet acide dilué à l'étape (c);

— on soutire de l'oléum dans l'étape (d);

— on soutire de l'acide concentré dans l'étape (c);

— on remplace dans l'étape (a) l'acide dilué soutiré par de l'acide concentré soutiré dans l'étape (c); et

— on remplace dans l'étape (d) l'oléum soutiré par de l'acide concentré soutiré dans l'étape (c).

5. Procédé selon la revendication 4, caractérisé en ce qu'on ajoute l'oléum soutiré dans l'étape (d) à l'acide dilué soutiré dans l'étape (a).

## Patentansprüche

1. Verfahren zur Herstellung von Schwefelsäure, bei dem man von einem Röstgas ausgeht, das SO₂, Wasserdampf und Quecksilber enthält, und das folgende Schritte einschließt:

a) das Gas wird mit Schwefelsäure in Kontakt gebracht, um ein trockenes Gas zu erhalten, wobei die Säure verdünnt und gleichzeitig der Quecksilbergehalt des Gases herabgesetzt wird, indem ein Teil des in dem ursprünglichen Gas enthaltenen Quecksilbers in die Schwefelsäure geht;

b) das trockene Gas wird einer katalytischen Oxidation unterworfen, um ein an SO₃ reiches Gas zu erhalten;

c) das an SO₃ reiche Gas wird mit konzentrierter Schwefelsäure in Kontakt gebracht, wobei das SO₃ in dieser konzentrierten Säure absorbiert wird und die Konzentration dieser Säure durch Zugabe von verdünnter Schwefelsäure auf ihrem Ausgangswert gehalten wird; und

d) nach Ausführung des Schrittes (a) und bevor der Schritt (c) ausgeführt wird, wird das Gas mit einem Schwefelsäure enthaltenden Sulfatierungsmittel in Kontakt gebracht, um den Quecksilbergehalt des Gases weiter herabzusetzen;

dadurch gekennzeichnet, daß das Gas mit einem Schwefelsäure enthaltenden Sulfatierungsmittel nach Schritt (b) in Kontakt gebracht und daß Oleum als Sulfatierungsmittel verwendet wird.

2. Verfahren nach Anspruch 1, dadurch gekennzeichnet, daß der Schritt (a) in zwei Stufen ausgeführt wird.

3. Verfahren nach Anspruch 1 oder 2, dadurch gekennzeichnet, daß

— verdünnte Säure in Schritt (a) entnommen wird, das Quecksilber in dieser entnommenen Säure niedergeschlagen wird, das niedergeschlagene Quecksilber von der Säure getrennt wird, so daß von Quecksilber freie verdünnte Säure erhalten wird, und diese verdünnte Säure für Schritt (c) verwendet wird;

— Oleum in Schritt (d) entnommen wird, mit dem die in Schritt (a) entnommene verdünnte Säure ersetzt wird; und

— konzentrierte Säure in Schritt (c) entnommen wird, mit der das in Schritt (d) entnommene Oleum ersetzt wird.

4. Verfahren nach Anspruch 1 oder 2, dadurch gekennzeichnet, daß

— verdünnte Säure in Schritt (a) entnommen wird, das Quecksilber in dieser entnommenen Säure niedergeschlagen wird, das niedergeschlagene Quecksilber von der Säure getrennt wird, so daß von Quecksilber freie verdünnte Säure erhalten wird, und diese verdünnte Säure für Schritt (c) verwendet wird;
— Oleum in Schritt (d) entnommen wird;
— konzentrierte Säure in Schritt (c) entnommen wird;
— die in Schritt (a) entnommene verdünnte Säure ersetzt wird durch die in Schritt (c) entnommene konzentrierte Säure; und
— das in Schritt (d) entnommene Oleum ersetzt wird durch die in Schritt (c) entnommene konzentrierte Säure.

5. Verfahren nach Anspruch 4, dadurch gekennzeichnet, daß das in Schritt (d) entnommene Oleum der in Schritt (a) entnommenen verdünnten Säure zugesetzt wird.

**Claims**

1. A process for producing sulphuric acid from a roasting gas containing SO2, water-vapour and mercury, comprising the following steps:

a) the gas in contacted with sulphuric acid so as to produce a dry gas, thereby diluting the acid and simultaneously lowering the mercury content of the gas, part of the mercury present in the starting gas passing in the sulphuric acid;

b) the dry gas is subjected to a catalytic oxidation treatment so as to produce a gas that is rich in SO3;

c) the gas rich in SO3 is contacted with concentrated sulphuric acid, thereby absorbing the SO3 in this concentrated acid, and the concentration of this is maintained at its initial value by adding diluted sulphuric acid; and

d) after having carried out step (a) and before carrying out step (c), the gas is contacted with a sulphating agent containing sulphuric acid so as to lower further the mercury content of the gas,

this process being characterized in that the gas is contacted with a sulphating agent containing sulphuric acid after step (b) and that oleum is used as a sulphating agent.

2. A process according to claim 1, characterized in that step (a) is carried out in two stages.

3. A process according to claim 1 or 2, characterized in that

— diluted acid is tapped in step (a), the mercury is precipitated in this tapped acid, the mercury precipitate is separated from the acid, thereby producing mercury free diluted acid, and this diluted acid is used in step (c);
— oleum is tapped in step (d) that is substituted in step (a) for the tapped diluted acid; and
— concentrated acid is tapped in step (c) that is substituted in step (d) for the tapped oleum.

4. A process according to claim 1 or 2, characterized in taht

— diluted acid is tapped in step (a), the mercury in this tapped acid is precipitated, the mercury precipitate ist separated from the acid, thereby producing mercury free diluted acid, and this diluted acid is used in step (c);
— oleum is tapped in step (d);
— concentrated acid is tapped in step (c);
— concentrated acid tapped in step (c) is substituted in step (a) for the tapped diluted acid; and
— concentrated acid tapped in step (c) is substituted in step (d) for the tapped oleum.

5. A process according to claim 4, characterized in that the oleum tapped in step (d) is added to the diluted acid tapped in step (a).

0 078 073